# EUROPÄISCHE PATENTSCHRIFT

(11) **EP 3 276 911 B1**
(45) Veröffentlichungstag und Bekanntmachung des Hinweises auf die Patenterteilung: **04.12.2019**
(21) Anmeldenummer: 17180653.2
(22) Anmeldetag: 11.07.2017
(51) Int. Cl.: H04L 29/06, H04L 9/32

(54) **AUTHENTIFIZIERTE VERBINDUNG ZWISCHEN MINDESTENS ZWEI KOMMUNIKATIONSPARTNERN**
AUTHENTICATED CONNECTION BETWEEN AT LEAST TWO COMMUNICATION PARTNERS
LIAISON AUTHENTIFIÉE ENTRE AU MOINS DEUX PARTENAIRES DE COMMUNICATION

(30) Priorität: 26.07.2016 DE 102016213685
(43) Veröffentlichungstag der Anmeldung: 31.01.2018
(73) Patentinhaber: VOLKSWAGEN AKTIENGESELLSCHAFT, 38440 Wolfsburg (DE)
(72) Erfinder: Winkelvos, Timo, 38173 Sickte (DE); Tschache, Alexander, 38436 Wolfsburg (DE); Wuschke, Martin, 38527 Meine (DE)

(56) Entgegenhaltungen:
- WO-A1-2014/086654
- DE-A1-102013 010 250
- JP-A- 2001 211 149
- US-A1- 2009 227 282

## Beschreibung

Die Erfindung betrifft ein Verfahren zum Bereitstellen einer authentifizierten Verbindung zwischen mindestens zwei Kommunikationspartnern und ein Kommunikationssystem.

Moderne Fahrzeuge verfügen über Infotainment-Systeme, welche sich mit Smartphones koppeln lassen. Durch die Kopplung kann ein Infotainment-System beispielsweise auf Medieninhalte zugreifen, welche auf dem gekoppelten Smartphone gespeichert sind, um diese im Fahrzeug wiederzugeben.

Außerdem kann eine signalleitende Verbindung zwischen dem fahrzeuginternen Infotainment-System und dem Smartphone dazu verwendet werden, eine Benutzeridentifikation durchzuführen oder dem Infotainment-System anwendungsbezogene Benutzerdaten bereitzustellen.

Da zwischen dem Infotainment-System und dem Smartphone üblicherweise auch personenbezogene Daten und anwendungsbezogene Zugangsdaten übermittelt werden, ist diese signalleitende Verbindung mit einem geeigneten Schutz auszustatten.

Die Druckschrift DE 10 2005 023 544 A1 schlägt hierzu ein Kommunikationssystem mit einer Fahrzeug-Bedieneinheit, einer Fahrzeug-Ausgabeeinheit, einem Schnittstellenrechner und einem mobilen Endgerät vor, wobei der Schnittstellenrechner einen Zugangsschutz aufweist, damit das mobile Endgerät nur auf autorisierte Fahrzeugfunktionen zugreifen kann.

Aus der Druckschrift DE 10 2012 008 834 A1 ist außerdem ein Verfahren zum Verbinden von Endgeräten mit einer fahrzeugeigenen Vorrichtung bekannt, wobei für Verbindungen zwischen einem Endgerät und einem ersten Paarungsserver eine Kopplungsinformation erzeugt wird, welche zu einem zweiten Paarungsserver übertragen wird, um eine Überprüfung der Berechtigung des Endgeräts durchzuführen.

Darüber hinaus schlägt die Druckschrift DE 10 2014 118 555 A1 ein Verfahren zum Verbinden eines Drahtlos-Endgeräts mit einem Fahrzeug vor, wobei nach der Herstellung einer Verbindung und der Identifikation des Drahtlos-Endgeräts zunächst ermittelt wird, ob das Drahtlos-Endgerät authentifiziert ist und somit für eine Verbindung mit einem Infotainment-System geeignet ist, bevor ein Datenaustausch stattfindet.

US 2009/227282 A1 lehrt eine Kommunikationsvorrichtung mit einem ersten Kommunikationsabschnitt, der einen ersten Kommunikationsmodus mit einer niedrigen Kommunikationsrate unterstützt, und einen zweiten Kommunikationsabschnitt, der einen zweiten Kommunikationsmodus unterstützt, der eine höhere Kommunikationsrate als der erste Kommunikationsmodus aufweist. Die Kommunikationsvorrichtung umfasst einen Paketerzeugungsabschnitt und einen Kommunikationssteuerabschnitt.
JP 2001 211-149 A lehrt die Bereitstellung eines Datenprozessors, der Inhalte nur wiedergeben kann, wenn sie gemäß der Nutzungsbeschränkung des Inhalts spezifiziert sind.

Bei den bekannten Lösungen erfolgt die Authentifizierung stets auf der Kommunikationskanalebene. Beispielsweise findet die Authentifizierung einer Bluetooth-Verbindung statt, welche nach der erfolgreichen Authentifizierung für sämtliche Anwendungen beziehungsweise Applikationen genutzt werden kann.

Es besteht jedoch das Problem, das nicht immer sämtliche Anwendungen beziehungsweise Applikationen Zugriff auf eine authentifizierte Verbindung haben sollen. Die bekannten Lösungen sind jedoch für eine Authentifizierung auf Anwendungs- beziehungsweise Applikationsebene nicht geeignet.

Der Erfindung liegt nun die Aufgabe zugrunde, eine sichere und komfortable Authentifizierung einer Verbindung zwischen zwei Kommunikationspartnern zu ermöglichen, wobei die Authentifizierung auch auf Anwendungs- beziehungsweise Applikationsebene erfolgen kann.

Diese Aufgabe wird gelöst durch ein Verfahren gemäß Anspruch 1 beziehungsweise ein Kommunikationssystem gemäß Anspruch 10.

Bei dem erfindungsgemäßen Verfahren zum Bereitstellen einer authentifizierten Verbindung zwischen mindestens zwei Kommunikationspartnern, so wie es im Anspruch 1 definiert ist, wird ein gemeinsamer geheimer Schlüssel für die mindestens zwei Kommunikationspartner bereitgestellt, bevor eine anonyme signalleitende Verbindung zwischen den mindestens zwei Kommunikationspartnern aufgebaut wird. Sämtliche Nachrichten der Verbindung zwischen den mindestens zwei Kommunikationspartnern werden mit dem gemeinsamen geheimen Schlüssel verschlüsselt.

Erfindungsgemäß wird die Verbindung zwischen den mindestens zwei Kommunikationspartnern zusätzlich zu der Verschlüsselung der Nachrichten mit dem gemeinsamen geheimen Schlüssel durch einen Benutzer authentifiziert.

Das erfindungsgemäße Verfahren hat den Vorteil, dass ein symmetrisches oder hybrides Kryptosystem, bei welchem die mindestens zwei Kommunikationspartner zur Verschlüsselung denselben Schlüssel verwenden und somit kein vorausgehender Schlüsselaustausch stattfinden muss, mit einem Pairing-Verfahren kombiniert wird, bei welchem der Benutzer die Verbindung zwischen den mindestens zwei Kommunikationspartnern zusätzlich authentifiziert. Durch die zusätzliche Authentifizierung, welche durch den Benutzer auszuführen ist, kann ein Man-in-the-Middle-Angriff (MITM-Angriff) wirksam vermieden werden. Die Sicherheit der Verbindung zwischen den mindestens zwei Kommunikationspartnern ist somit erhöht. Außerdem erlaubt die Notwendigkeit einer Benutzerhandlung die Umsetzung der Authentifizierung auf Anwendungs- beziehungsweise Applikationsebene.

In dem Verfahren kann ein erster Kommunikationspartner der mindestens zwei Kommunikationspartner als fahrzeuginterne Einrichtung ausgebildet sein. Insbesondere ist die fahrzeuginterne Einrichtung als Infotainment-System des Fahrzeugs ausgeführt. Vorzugsweise agiert der erste Kommunikationspartner der mindestens zwei Kommunikationspartner als Server. Alternativ oder zusätzlich kann in dem Verfahren ein zweiter Kommunikationspartner der mindestens zwei Kommunikationspartner als mobiles Endgerät ausgebildet sein. Insbesondere ist das mobile Endgerät als Smartphone ausgeführt. Vorzugsweise agiert der zweite Kommunikationspartner der mindestens zwei Kommunikationspartner als Client.

Die anonyme signalleitende Verbindung zwischen den mindestens zwei Kommunikationspartnern basiert auf einem Transport Layer Security Protokoll. Durch die hybride Verschlüsselung des Transport Layer Security Protokolls wird die Sicherheit weiter erhöht, ohne dass die Notwendigkeit eines vorausgehenden Schlüsselaustausches besteht. Das Transport Layer Security Protokoll ermöglicht es höhere Protokolle auf Basis des Transport Layer Security Protokoll Protokolls zu implementieren. Das Transport Layer Security Protokoll ist somit unabhängig von Anwendungen beziehungsweise Applikationen sowie von dem verwendeten System.

Das Bereitstellen eines gemeinsamen geheimen Schlüssels für die mindestens zwei Kommunikationspartner kann das Durchführen eines Schlüsselaustauschprotokolls zum Erzeugen des gemeinsamen geheimen Schlüssels umfassen. Vorzugsweise ist das Schlüsselaustauschprotokoll ein asymmetrisches Schlüsselaustauschprotokoll, mit welchem der erzeugte gemeinsame geheime Schlüssel auch über einen abgehörten Kommunikationskanal sicher übertragen werden kann. Es besteht somit nicht die Notwendigkeit, dass der gemeinsame geheime Schlüssel über einen sicheren Kommunikationskanal übermittelt werden muss. Der Verbindungsaufbau wird somit vereinfacht und beschleunigt.

Das Schlüsselaustauschprotokoll kann ein Diffie-Hellman-Schlüsselaustauschprotokoll umfassen. Insbesondere basiert das verwendete Diffie-Hellman-Schlüsselaustauschprotokoll auf elliptischen Kurven (Elliptic Curve Diffie-Hellman (ECDH)). Über das Diffie-Hellman-Schlüsselaustauschprotokoll können die mindestens zwei Kommunikationspartner über einen öffentlichen und nicht-geschützten Kommunikationskanal einen gemeinsamen geheimen Schlüssel erzeugen. Bei dem Diffie-Hellman-Schlüsselaustauschprotokoll besteht jedoch das Risiko, dass sich ein Angreifer zwischen die mindestens zwei Kommunikationspartner schaltet und somit in der Lage ist, Nachrichten zu verändern. Da bei dem erfindungsgemäßen Verfahren eine nachträgliche Authentifizierung der Verbindung durch den Benutzer erfolgt, wird dieses Risiko eliminiert, sodass die Verwendung des Diffie-Hellman-Schlüsselaustauschprotokolls zur Erzeugung eines gemeinsamen geheimen Schlüssels in dem erfindungsgemäßen Verfahren besonders geeignet ist.

Das Authentifizieren der Verbindung zwischen den mindestens zwei Kommunikationspartnern durch den Benutzer kann das Berechnen eines Integritätsüberprüfungswertes auf Grundlage des gemeinsamen geheimen Schlüssels durch einen ersten Kommunikationspartner der mindestens zwei Kommunikationspartner und/oder das Berechnen eines Integritätsüberprüfungswertes auf Grundlage des gemeinsamen geheimen Schlüssels durch einen zweiten Kommunikationspartner der mindestens zwei Kommunikationspartner umfassen. Durch die Berechnung eines Integritätsüberprüfungswertes kann geprüft werden, ob ein Man-in-the-Middle-Angriff stattgefunden hat. Durch den Integritätsüberprüfungswert kann sichergestellt werden, dass keine unerwünschte Modifikation, die nicht verhindert werden konnte, stattgefunden hat. Hierzu umfasst das Authentifizieren der Verbindung zwischen den mindestens zwei Kommunikationspartnern durch den Benutzer vorzugsweise das Wiedergeben des von dem ersten Kommunikationspartner berechneten Integritätsüberprüfungswertes durch den ersten Kommunikationspartner und/oder das Wiedergeben des von dem zweiten Kommunikationspartner berechneten Integritätsüberprüfungswertes durch den zweiten Kommunikationspartner. Das Wiedergeben des von dem ersten Kommunikationspartner berechneten Integritätsüberprüfungswertes kann beispielsweise durch eine optische Wiedergabe des Integritätsüberprüfungswertes mittels einer Anzeigeeinheit des ersten Kommunikationspartners und/oder durch eine akustische Wiedergabe des Integritätsüberprüfungswertes mittels einer Tonwiedergabeeinrichtung des ersten Kommunikationspartners erfolgen. Das Wiedergeben des von dem zweiten Kommunikationspartner berechneten Integritätsüberprüfungswertes kann beispielsweise durch eine optische Wiedergabe des Integritätsüberprüfungswertes mittels einer Anzeigeeinheit des zweiten Kommunikationspartners und/oder durch eine akustische Wiedergabe des Integritätsüberprüfungswertes mittels einer Tonwiedergabeeinrichtung des zweiten Kommunikationspartners erfolgen.

Das Authentifizieren der Verbindung zwischen den mindestens zwei Kommunikationspartnern durch den Benutzer kann das Vergleichen des durch den ersten Kommunikationspartner wiedergegebenen Integritätsüberprüfungswertes mit dem durch den zweiten Kommunikationspartner wiedergegebenen Integritätsüberprüfungswert durch den Benutzer und/oder das Bestätigen der Gleichheit des durch den ersten Kommunikationspartner wiedergegebenen Integritätsüberprüfungswertes und des durch den zweiten Kommunikationspartner wiedergegebenen Integritätsüberprüfungswertes durch den Benutzer umfassen. Durch das Bestätigen der Gleichheit des durch den ersten Kommunikationspartner wiedergegebenen Integritätsüberprüfungswertes und des durch den zweiten Kommunikationspartner wiedergegebenen Integritätsüberprüfungswertes durch den Benutzer wird die Integritätsprüfung abgeschlossen. Stimmen die von dem ersten Kommunikationspartner und dem zweiten Kommunikationspartner wiedergegebenen Integritätsüberprüfungswerte überein, so kann ausgeschlossen werden, dass ein unbemerkter Man-in-the-Middle-Angriff stattgefunden hat. Das Authentifizieren der Verbindung zwischen den mindestens zwei Kommunikationspartnern kann somit durch die Bestätigung der Gleichheit des durch den ersten Kommunikationspartner wiedergegebenen Integritätsüberprüfungswertes und des durch den zweiten Kommunikationspartner wiedergegebenen Integritätsüberprüfungswertes durch den Benutzer erfolgen. Im Falle eines erfolgten Man-in-the-Middle-Angriffs würde der von dem ersten Kommunikationspartner wiedergegebene Integritätsüberprüfungswert von dem von dem zweiten Kommunikationspartner wiedergegebenen Integritätsüberprüfungswert abweichen. Der Benutzer kann in diesem Fall durch eine entsprechende Eingabe dem ersten Kommunikationspartner und/oder dem zweiten Kommunikationspartner mitteilen, dass keine Übereinstimmung vorliegt. Die Authentifizierung wäre somit gescheitert, da davon ausgegangen werden muss, dass ein Man-in-the-Middle-Angriff stattgefunden hat.

Das Bestätigen der Gleichheit des durch den ersten Kommunikationspartner wiedergegebenen Integritätsüberprüfungswertes und des durch den zweiten Kommunikationspartner wiedergegebenen Integritätsüberprüfungswertes durch den Benutzer kann das Betätigen einer Betätigungseinrichtung des ersten Kommunikationspartners durch den Benutzer und/oder das Betätigen einer Betätigungseinrichtung des zweiten Kommunikationspartners durch den Benutzer umfassen. Die Betätigungseinrichtung des ersten Kommunikationspartners und/oder die Betätigungseinrichtung des zweiten Kommunikationspartners umfasst vorzugsweise jeweils ein oder mehrere drucksensitive Eingabeelemente, wie beispielsweise Druckknöpfe oder Tasten, und/oder einen Touchscreen. Alternativ oder zusätzlich umfasst die Betätigungseinrichtung des ersten Kommunikationspartners und/oder die Betätigungseinrichtung des zweiten Kommunikationspartners jeweils eine Tonaufzeichnungseinrichtung und eine mit der Tonaufzeichnungseinrichtung verbundene Auswerteeinheit, welche dazu ausgebildet ist, Spracheingaben des Benutzers auszuwerten.

Der durch den ersten Kommunikationspartner und/oder den zweiten Kommunikationspartner berechnete Integritätsüberprüfungswert kann eine Prüfsumme über den gemeinsamen geheimen Schlüssel oder eine Prüfsumme über einen von dem gemeinsamen geheimen Schlüssel abgeleiteten Wert sein. Vorzugsweise berechnen der erste Kommunikationspartner und/oder der zweite Kommunikationspartner den Integritätsüberprüfungswert jeweils mittels einer kryptologischen Hashfunktion. Der daraus ermittelte Wert lässt keinen Rückschluss auf den gemeinsamen geheimen Schlüssel zu und eignet sich somit besonders für das erfindungsgemäße Verfahren.

Das erfindungsgemäße Kommunikationssystem umfasst mindestens zwei Kommunikationspartner, wobei die mindestens zwei Kommunikationspartner dazu eingerichtet sind, eine anonyme signalleitende Verbindung miteinander aufzubauen. Sämtliche Nachrichten der Verbindung zwischen den mindestens zwei Kommunikationspartnern werden dabei mit einem gemeinsamen geheimen Schlüssel verschlüsselt. Die mindestens zwei Kommunikationspartner sind außerdem dazu eingerichtet, dass ein Benutzer die Verbindung zwischen den mindestens zwei Kommunikationspartnern authentifizieren kann.

Das erfindungsgemäße Kommunikationssystem hat den Vorteil, dass ein symmetrisches oder hybrides Kryptosystem, bei welchem die mindestens zwei Kommunikationspartner zur Verschlüsselung denselben Schlüssel verwenden und somit kein vorausgehender Schlüsselaustausch stattfinden muss, mit einem Pairing-Verfahren kombiniert wird, bei welchem der Benutzer die Verbindung zwischen den mindestens zwei Kommunikationspartnern zusätzlich authentifiziert. Durch die zusätzliche Authentifizierung, welche durch den Benutzer auszuführen ist, kann ein Man-in-the-Middle-Angriff wirksam vermieden werden. Die Sicherheit der Verbindung zwischen den mindestens zwei Kommunikationspartnern ist somit erhöht. Außerdem erlaubt die Notwendigkeit einer Benutzerhandlung die Umsetzung der Authentifizierung auf Anwendungs- beziehungsweise Applikationsebene.

Ein erster Kommunikationspartner der mindestens zwei Kommunikationspartner des Kommunikationssystems kann als fahrzeuginterne Einrichtung ausgebildet sein. Insbesondere ist die fahrzeuginterne Einrichtung als Infotainment-System des Fahrzeugs ausgeführt. Vorzugsweise agiert der erste Kommunikationspartner der mindestens zwei Kommunikationspartner als Server. Alternativ oder zusätzlich ist ein zweiter Kommunikationspartner der mindestens zwei Kommunikationspartner des Kommunikationssystems als mobiles Endgerät ausgebildet. Insbesondere ist das mobile Endgerät als Smartphone ausgeführt. Vorzugsweise agiert der zweite Kommunikationspartner der mindestens zwei Kommunikationspartner als Client.

Bei dem Kommunikationssystem kann die anonyme signalleitende Verbindung zwischen den mindestens zwei Kommunikationspartnern auf einem Transport Layer Security Protokoll basieren. Durch die hybride Verschlüsselung des Transport Layer Security Protokolls wird die Sicherheit weiter erhöht, ohne dass die Notwendigkeit eines vorausgehenden Schlüsselaustausches besteht. Das Transport Layer Security Protokoll ermöglicht es höhere Protokolle auf Basis des Transport Layer Security Protokoll Protokolls zu implementieren. Das Transport Layer Security Protokoll ist somit unabhängig von Anwendungen beziehungsweise Applikationen sowie von dem verwendeten System.

Die mindestens zwei Kommunikationspartner können dazu eingerichtet sein, ein Schlüsselaustauschprotokoll, insbesondere ein Diffie-Hellman-Schlüsselaustauschprotokoll, zum Erzeugen des gemeinsamen geheimen Schlüssels auszuführen. Insbesondere sind die mindestens zwei Kommunikationspartner dazu eingerichtet, ein auf elliptischen Kurven (Elliptic Curve Diffie-Hellman (ECDH)) basierendes Diffie-Hellman-Schlüsselaustauschprotokoll auszuführen. Über das Diffie-Hellman-Schlüsselaustauschprotokoll können die mindestens zwei Kommunikationspartner über einen öffentlichen und nicht-geschützten Kommunikationskanal einen gemeinsamen geheimen Schlüssel erzeugen. Bei dem Diffie-Hellman-Schlüsselaustauschprotokoll besteht jedoch das Risiko, dass sich ein Angreifer zwischen die mindestens zwei Kommunikationspartner schaltet und somit in der Lage ist, Nachrichten zu verändern. Da bei dem erfindungsgemäßen Kommunikationssystem eine nachträgliche Authentifizierung der Verbindung durch den Benutzer erfolgen kann, wird dieses Risiko eliminiert, sodass die Verwendung des Diffie-Hellman-Schlüsselaustauschprotokolls zur Erzeugung eines gemeinsamen geheimen Schlüssels in dem erfindungsgemäßen Kommunikationssystem besonders geeignet ist.

Die mindestens zwei Kommunikationspartner können dazu eingerichtet sein, jeweils einen Integritätsüberprüfungswertes auf Grundlage des gemeinsamen geheimen Schlüssels zu berechnen und dem Benutzer mittels einer Anzeigeeinrichtung wiederzugeben, wobei die mindestens zwei Kommunikationspartner dem Benutzer vorzugsweise jeweils eine Betätigungseinrichtung zum Bestätigen der Gleichheit der durch die mindestens zwei Kommunikationspartner wiedergegebenen Integritätsüberprüfungswerte bereitstellen. Durch die Berechnung eines Integritätsüberprüfungswertes kann geprüft werden, ob ein Man-in-the-Middle-Angriff stattgefunden hat. Durch den Integritätsüberprüfungswert kann sichergestellt werden, dass keine unerwünschte Modifikation, die nicht verhindert werden konnte, stattgefunden hat. Die Anzeigeeinrichtung kann dazu eingerichtet sein, den Integritätsüberprüfungswert optisch und/oder akustisch wiederzugeben.

Das Kommunikationssystem kann außerdem dazu eingerichtet sein, das Verfahren zum Bereitstellen einer authentifizierten Verbindung zwischen mindestens zwei Kommunikationspartnern nach einer der vorstehend beschriebenen Ausführungsformen auszuführen. Es gelten die gleichen Vorteile und Modifikationen wie zuvor beschrieben.

Weitere bevorzugte Ausgestaltungen der Erfindung ergeben sich aus den übrigen, in den Unteransprüchen genannten Merkmalen.

Die verschiedenen in dieser Anmeldung genannten Ausführungsformen der Erfindung sind, sofern im Einzelfall nicht anders ausgeführt, mit Vorteil miteinander kombinierbar.

Die Erfindung wird nachfolgend in Ausführungsbeispielen anhand der zugehörigen Zeichnungen erläutert. Es zeigen:
- Figur 1: ein Ausführungsbeispiel des erfindungsgemäßen Kommunikationssystems in einer schematischen Darstellung; und
- Figur 2: ein Ausführungsbeispiel des erfindungsgemäßen Verfahrens in einem schematischen Ablaufdiagramm.

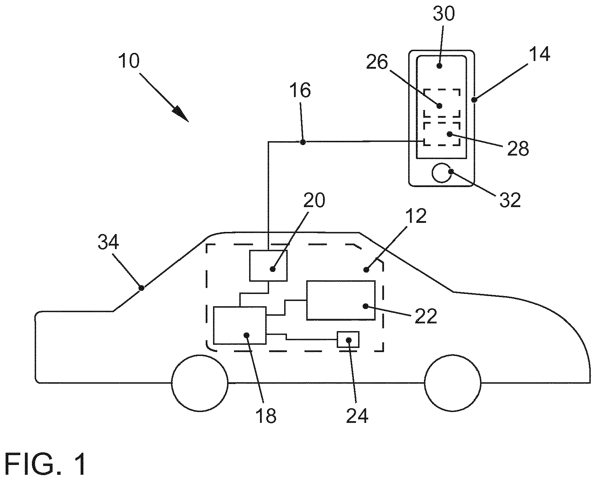

Figur 1 zeigt ein Kommunikationssystem 10 mit zwei Kommunikationspartnern 12, 14. Der erste Kommunikationspartner 12 ist als fahrzeuginterne Einrichtung des Fahrzeugs 34 ausgebildet, wobei die fahrzeuginterne Einrichtung ein Infotainment-System ist. Der zweite Kommunikationspartner 14 ist als mobiles Endgerät ausgebildet, wobei das mobile Endgerät als Smartphone ausgeführt ist.

Der erste Kommunikationspartner 12 umfasst eine Recheneinheit 18, ein Kommunikationsmodul 20, eine Anzeigeeinrichtung 22 und eine Betätigungseinrichtung 24. Das Kommunikationsmodul 20, die Anzeigeeinrichtung 22 und die Betätigungseinrichtung 24 sind signalleitend mit der Recheneinheit 18 verbunden. Das Kommunikationsmodul 20 ist dazu eingerichtet, drahtlos, beispielsweise per Bluetooth, mit anderen Kommunikationspartnern zu kommunizieren. Die Anzeigeeinrichtung 22 ist als Display ausgebildet und in das Armaturenbrett des Fahrzeugs 34 integriert. Die Betätigungseinrichtung 24 umfasst mehrere drucksensitive Eingabeelemente und in die Mittelkonsole des Fahrzeugs 34 integriert.

Der zweite Kommunikationspartner 14 umfasst ebenfalls eine Recheneinheit 26, ein Kommunikationsmodul 28, eine Anzeigeeinrichtung 30 und eine Betätigungseinrichtung 32. Das Kommunikationsmodul 28, die Anzeigeeinrichtung 30 und die Betätigungseinrichtung 32 sind signalleitend mit der Recheneinheit 26 verbunden. Das Kommunikationsmodul 28 ist dazu eingerichtet, drahtlos, beispielsweise per Bluetooth, mit anderen Kommunikationspartnern zu kommunizieren. Die Anzeigeeinrichtung 30 ist als Touchscreen ausgebildet. Die Betätigungseinrichtung 32 ist als Druckknopf ausgebildet.

Die zwei Kommunikationspartner 12, 14 sind dazu eingerichtet, über die jeweiligen Kommunikationsmodule 20, 28 eine anonyme signalleitende Verbindung 16 miteinander aufzubauen, wobei sämtliche Nachrichten der Verbindung 16 zwischen den zwei Kommunikationspartnern 12, 14 mit einem gemeinsamen geheimen Schlüssel verschlüsselt werden. Dadurch, dass die zwei Kommunikationspartner 12, 14 dazu eingerichtet sind, ein Diffie-Hellman-Schlüsselaustauschprotokoll zum Erzeugen des gemeinsamen geheimen Schlüssels auszuführen, kann die Schlüsselerzeugung über einen öffentlichen und nicht geschützten Kommunikationskanal erfolgen. Die anonyme signalleitende Verbindung 16 zwischen den zwei Kommunikationspartnern 12, 14 basiert auf einem Transport Layer Security Protokoll.

Die zwei Kommunikationspartner 12, 14 sind dazu eingerichtet, dass ein Benutzer die Verbindung 16 zwischen den zwei Kommunikationspartnern 12, 14 authentifizieren kann. Hierzu berechnen der erste Kommunikationspartner 12 und der zweite Kommunikationspartner 14 auf Grundlage des gemeinsamen geheimen Schlüssels jeweils einen Integritätsüberprüfungswertes und zeigen dem Benutzer den berechneten Integritätsüberprüfungswert mittels der jeweiligen Anzeigeeinrichtung 22, 30 an. Über die jeweiligen Betätigungseinrichtungen 24, 32 kann der Benutzer dann die Gleichheit der durch die zwei Kommunikationspartner 12, 14 angezeigten Integritätsüberprüfungswerte bestätigen.

Das Authentifizieren der Verbindung 16 zwischen den zwei Kommunikationspartnern 12, 14 erfolgt durch die Bestätigung der Gleichheit des von dem ersten Kommunikationspartner 12 angezeigten Integritätsüberprüfungswertes und des von dem zweiten Kommunikationspartner 14 wiedergegebenen Integritätsüberprüfungswertes durch den Benutzer.

Das gezeigte Kommunikationssystem 10 ist dazu eingerichtet, das Verfahren zum Bereitstellen einer authentifizierten Verbindung 16 zwischen mindestens zwei Kommunikationspartnern 12, 14 nach einem der Ansprüche 1 bis 9 auszuführen.

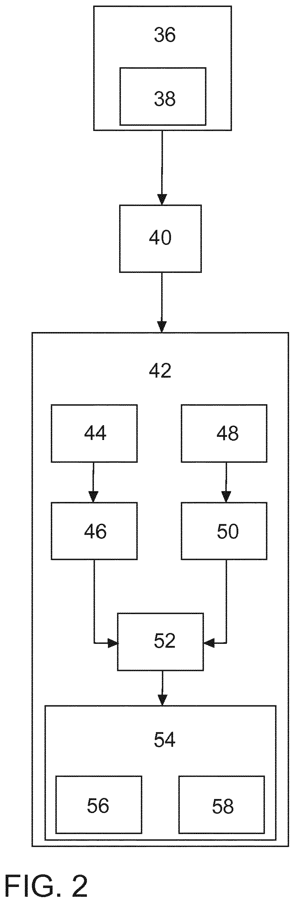

Figur 2 zeigt das erfindungsgemäße Verfahren zum Bereitstellen einer authentifizierten Verbindung 16 zwischen zwei Kommunikationspartnern 12, 14, welches mit dem folgenden Schritt beginnt:
36) Bereitstellen eines gemeinsamen geheimen Schlüssels für die zwei Kommunikationspartner 12, 14.

Der erste Kommunikationspartner 12 ist dabei als fahrzeuginternes Infotainment-System ausgeführt und der zweite Kommunikationspartner 14 ist als Smartphone ausgebildet.

Das Bereitstellen eines gemeinsamen geheimen Schlüssels für die zwei Kommunikationspartner 12, 14 umfasst den folgenden Schritt:
38) Durchführen eines Schlüsselaustauschprotokolls zum Erzeugen des gemeinsamen geheimen Schlüssels.

Das durchgeführte Schlüsselaustauschprotokoll ist ein Diffie-Hellman-Schlüsselaustauschprotokoll. Nachdem den zwei Kommunikationspartnern 12, 14 ein gemeinsamer geheimer Schlüssel bereitgestellt wurde, kann der folgende Schritt ausgeführt werden:
40) Aufbauen einer anonymen signalleitenden Verbindung 16 zwischen den zwei Kommunikationspartnern 12, 14, wobei sämtliche Nachrichten der Verbindung 16 zwischen den zwei Kommunikationspartnern 12, 14 mit dem gemeinsamen geheimen Schlüssel verschlüsselt werden.

Die aufgebaute anonyme signalleitende Verbindung 16 zwischen den zwei Kommunikationspartnern 12, 14 basiert auf einem Transport Layer Security Protokoll. Nachdem die anonyme signalleitende Verbindung 16 zwischen den zwei Kommunikationspartnern 12, 14 aufgebaut wurde, wird der folgende Schritt ausgeführt:
42) Authentifizieren der Verbindung 16 zwischen den zwei Kommunikationspartnern 12, 14 durch einen Benutzer.

Das Authentifizieren der Verbindung 16 zwischen den zwei Kommunikationspartnern 12, 14 durch den Benutzer umfasst die Schritte:
44) Berechnen eines Integritätsüberprüfungswertes auf Grundlage des gemeinsamen geheimen Schlüssels durch einen ersten Kommunikationspartner 12 der zwei Kommunikationspartner 12, 14; und
46) Wiedergeben des von dem ersten Kommunikationspartner 12 berechneten Integritätsüberprüfungswertes durch den ersten Kommunikationspartner 12.

Außerdem umfasst das Authentifizieren der Verbindung 16 zwischen den zwei Kommunikationspartnern 12, 14 durch den Benutzer die Schritte:
48) Berechnen eines Integritätsüberprüfungswertes auf Grundlage des gemeinsamen geheimen Schlüssels durch einen zweiten Kommunikationspartner 14 der zwei Kommunikationspartner 12, 14; und
50) Wiedergeben des von dem zweiten Kommunikationspartner 14 berechneten Integritätsüberprüfungswertes durch den zweiten Kommunikationspartner 14.

Der durch den ersten Kommunikationspartner 12 und den zweiten Kommunikationspartner 14 berechnete Integritätsüberprüfungswert ist eine Prüfsumme über den gemeinsamen geheimen Schlüssel. Nachdem dem Benutzer durch den ersten Kommunikationspartner 12 und dem zweiten Kommunikationspartner 14 jeweils der berechnete Integritätsüberprüfungswert wiedergegeben wurde, kann der folgende Schritt ausgeführt werden:
52) Vergleichen des durch den ersten Kommunikationspartner 12 wiedergegebenen Integritätsüberprüfungswertes mit dem durch den zweiten Kommunikationspartner 14 wiedergegebenen Integritätsüberprüfungswert durch den Benutzer.

Nachdem die Gleichheit des durch den ersten Kommunikationspartner 12 wiedergegebenen Integritätsüberprüfungswertes mit dem durch den zweiten Kommunikationspartner 14 wiedergegebenen Integritätsüberprüfungswert durch den Benutzer festgestellt wurde, kann der folgende Schritt ausgeführt werden:
54) Bestätigen der Gleichheit des durch den ersten Kommunikationspartner 12 wiedergegebenen Integritätsüberprüfungswertes und des durch den zweiten Kommunikationspartner 14 wiedergegebenen Integritätsüberprüfungswertes durch den Benutzer.

Das Bestätigen der Gleichheit des durch den ersten Kommunikationspartner 12 wiedergegebenen Integritätsüberprüfungswertes und des durch den zweiten Kommunikationspartner 14 wiedergegebenen Integritätsüberprüfungswertes durch den Benutzer umfasst die folgenden Schritte:
56) Betätigen einer Betätigungseinrichtung 24 des ersten Kommunikationspartners 12 durch den Benutzer; und
58) Betätigen einer Betätigungseinrichtung 32 des zweiten Kommunikationspartners 14 durch den Benutzer.

Das Authentifizieren der Verbindung 16 zwischen den zwei Kommunikationspartnern 12, 14 erfolgt durch die Bestätigung der Gleichheit des durch den ersten Kommunikationspartner 12 wiedergegebenen Integritätsüberprüfungswertes und des durch den zweiten Kommunikationspartner 14 wiedergegebenen Integritätsüberprüfungswertes durch den Benutzer.

Die Erfindung ermöglicht eine sichere und komfortable Authentifizierung einer Verbindung zwischen zwei Kommunikationspartnern, ohne auf eine Public-Key-Infrastruktur zurückgreifen zu müssen. Die Authentifizierung der Verbindung erfolgt über einen öffentlichen und nicht geschützten Kommunikationskanal und kann auch auf Anwendungs- beziehungsweise Applikationsebene erfolgen.

### Bezugszeichenliste

- 10: Kommunikationssystem
- 12: erster Kommunikationspartner
- 14: zweiter Kommunikationspartner
- 16: Verbindung
- 18: Recheneinheit
- 20: Kommunikationsmodul
- 22: Anzeigeeinrichtung
- 24: Betätigungseinrichtung
- 26: Recheneinheit
- 28: Kommunikationsmodul
- 30: Anzeigeeinrichtung
- 32: Betätigungseinrichtung
- 34: Fahrzeug
- 36-58: Verfahrensschritte

## Patentansprüche

1. Verfahren zum Bereitstellen einer authentifizierten Verbindung (16) zwischen mindestens zwei Kommunikationspartnern (12, 14) mit folgenden Schritten:
- Bereitstellen eines gemeinsamen geheimen Schlüssels für die mindestens zwei Kommunikationspartner (12, 14);
- Aufbauen einer anonymen signalleitenden Verbindung (16) zwischen den mindestens zwei Kommunikationspartnern (12, 14), wobei sämtliche Nachrichten der Verbindung (16) zwischen den mindestens zwei Kommunikationspartnern (12, 14) mit dem gemeinsamen geheimen Schlüssel verschlüsselt werden;
- Authentifizieren der Verbindung (16) zwischen den mindestens zwei Kommunikationspartnern (12, 14) durch einen Benutzer;
wobei das Authentifizieren der Verbindung (16) zwischen den mindestens zwei Kommunikationspartnern (12, 14) durch den Benutzer die folgende Schritte umfasst:
- Berechnen eines ersten Integritätsüberprüfungswertes auf Grundlage des gemeinsamen geheimen Schlüssels durch den ersten Kommunikationspartner (12) der mindestens zwei Kommunikationspartner (12, 14);
- Berechnen eines zweiten Integritätsüberprüfungswertes auf Grundlage des gemeinsamen geheimen Schlüssels durch den zweiten Kommunikationspartner (14) der mindestens zwei Kommunikationspartner (12, 14);
- Wiedergeben des von dem ersten Kommunikationspartner (12) berechneten Integritätsüberprüfungswertes durch den ersten Kommunikationspartner (12);
- Wiedergeben des von dem zweiten Kommunikationspartner (14) berechneten Integritätsüberprüfungswertes durch den zweiten Kommunikationspartner (14);
- Vergleichen des durch den ersten Kommunikationspartner (12) wiedergegebenen Integritätsüberprüfungswertes mit dem durch den zweiten Kommunikationspartner (14) wiedergegebenen Integritätsüberprüfungswert durch den Benutzer;
- Bestätigen der Gleichheit des durch den ersten Kommunikationspartner (12) wiedergegebenen Integritätsüberprüfungswertes und des durch den zweiten Kommunikationspartner (14) wiedergegebenen Integritätsüberprüfungswertes durch den Benutzer;
wobei das Authentifizieren der Verbindung (16) zwischen den mindestens zwei Kommunikationspartnern (12, 14) durch die Bestätigung der Gleichheit des durch den ersten Kommunikationspartner (12) wiedergegebenen Integritätsüberprüfungswertes und des durch den zweiten Kommunikationspartner (14) wiedergegebenen Integritätsüberprüfungswertes durch den Benutzer erfolgt;
wobei die anonyme signalleitende Verbindung (16) zwischen den mindestens zwei Kommunikationspartnern (12, 14) auf einem Transport Layer Security Protokoll basiert.

2. Verfahren nach Anspruch 1, **dadurch gekennzeichnet, dass** der erste Kommunikationspartner (12) der mindestens zwei Kommunikationspartner (12, 14) als fahrzeuginterne Einrichtung und/oder der zweite Kommunikationspartner (14) der mindestens zwei Kommunikationspartner (12, 14) als mobiles Endgerät ausgebildet ist.

3. Verfahren nach einem der vorhergehenden Ansprüche, **dadurch gekennzeichnet, dass** das Bereitstellen eines gemeinsamen geheimen Schlüssels für die mindestens zwei Kommunikationspartner (12, 14) den folgenden Schritt umfasst:
- Durchführen eines Schlüsselaustauschprotokolls zum Erzeugen des gemeinsamen geheimen Schlüssels.

4. Verfahren nach einem der vorhergehenden Ansprüche, **dadurch gekennzeichnet, dass** das Schlüsselaustauschprotokoll ein Diffie-Hellman-Schlüsselaustauschprotokoll umfasst.

5. Verfahren nach einem der vorherigen Ansprüche, **dadurch gekennzeichnet, dass** das Bestätigen der Gleichheit des durch den ersten Kommunikationspartner (12) wiedergegebenen Integritätsüberprüfungswertes und des durch den zweiten Kommunikationspartner (14) wiedergegebenen Integritätsüberprüfungswertes durch den Benutzer zumindest einen der folgenden Schritte umfasst:
- Betätigen einer Betätigungseinrichtung (24) des ersten Kommunikationspartners (12) durch den Benutzer;
- Betätigen einer Betätigungseinrichtung (32) des zweiten Kommunikationspartners (14) durch den Benutzer.

6. Verfahren nach einem der vorherigen Ansprüche, **dadurch gekennzeichnet, dass** der durch den ersten Kommunikationspartner (12) und/oder den zweiten Kommunikationspartner (14) berechnete Integritätsüberprüfungswert eine Prüfsumme über den gemeinsamen geheimen Schlüssel oder eine Prüfsumme über einen von dem gemeinsamen geheimen Schlüssel abgeleiteten Wert ist.

7. Kommunikationssystem (10), mit
- mindestens zwei Kommunikationspartnern (12, 14), **dadurch gekennzeichnet, dass**
die mindestens zwei Kommunikationspartner (12, 14) dazu eingerichtet sind, eine anonyme signalleitende Verbindung (16) miteinander aufzubauen, wobei sämtliche Nachrichten der Verbindung (16) zwischen den mindestens zwei Kommunikationspartnern (12, 14) mit einem gemeinsamen geheimen Schlüssel verschlüsselt werden;
wobei die mindestens zwei Kommunikationspartner (12, 14) dazu eingerichtet sind, dass ein Benutzer die Verbindung (16) zwischen den mindestens zwei Kommunikationspartnern (12, 14) authentifizieren kann;
wobei die mindestens zwei Kommunikationspartner (12, 14) dazu eingerichtet sind, jeweils einen Integritätsüberprüfungswertes auf Grundlage des gemeinsamen geheimen Schlüssels zu berechnen und dem Benutzer mittels einer Anzeigeeinrichtung (22, 30) wiederzugeben, wobei die mindestens zwei Kommunikationspartner (12, 14) dem Benutzer vorzugsweise jeweils eine Betätigungseinrichtung (24, 32) zum Bestätigen der Gleichheit der durch die mindestens zwei Kommunikationspartner (12, 14) wiedergegebenen Integritätsüberprüfungswerte bereitstellen;
wobei die anonyme signalleitende Verbindung (16) zwischen den mindestens zwei Kommunikationspartnern (12, 14) auf einem Transport Layer Security Protokoll basiert.

8. Kommunikationssystem (10) nach Anspruch 7, **dadurch gekennzeichnet, dass** ein erster Kommunikationspartner (12) der mindestens zwei Kommunikationspartner (12, 14) als fahrzeuginterne Einrichtung und/oder ein zweiter Kommunikationspartner (14) der mindestens zwei Kommunikationspartner (12, 14) als mobiles Endgerät ausgebildet ist.

9. Kommunikationssystem (10) nach einem der Ansprüche 7 oder 8, **dadurch gekennzeichnet, dass** die mindestens zwei Kommunikationspartner (12, 14) dazu eingerichtet sind, ein Schlüsselaustauschprotokoll, insbesondere ein Diffie-Hellman-Schlüsselaustauschprotokoll, zum Erzeugen des gemeinsamen geheimen Schlüssels auszuführen.

10. Kommunikationssystem (10) nach einem der Ansprüche 7 bis 9, **dadurch gekennzeichnet, dass** das Kommunikationssystem (10) dazu eingerichtet ist, das Verfahren zum Bereitstellen einer authentifizierten Verbindung (16) zwischen mindestens zwei Kommunikationspartnern (12, 14) nach einem der Ansprüche 1 bis 6 auszuführen.

## Claims

1. A method for providing an authenticated connection (16) between at least two communication partners (12, 14) having the following steps:
- Provision of a shared secret key for the at least two communication partners (12, 14);
- establishing an anonymous signal-conducting connection (16) between the at least two communication partners (12, 14), wherein all messages of the connection (16) between the at least two communication partners (12, 14) are encrypted with the shared secret key;
- authentication of the connection (16) between the at least two communication partners (12, 14) by a user;
wherein the authentication of the connection (16) between the at least two communication partners (12, 14) by the user comprises the following steps:
- calculation of a first integrity check value on the basis of the shared secret key by the first communication partner (12) of the at least two communication partners (12, 14);
- calculation of a second integrity check value on the basis of the shared secret key by the second communication partner (14) of the at least two communication partners (12, 14);
- reproduction of the integrity check value calculated by the first communication partner (12) by the first communication partner (12);
- reproduction of the integrity check value calculated by the second communication partner (14) by the second communication partner (14);
- comparison of the integrity check value reproduced by the first communication partner (12) with the integrity check value reproduced by the second communication partner (14) by a user;
- confirmation of the equality of the integrity check value reproduced by the first communication partner (12) and of the integrity check value reproduced by the second communication partner (14) by the user;
wherein the authentication of the connection (16) between the at least two communication partners (12, 14) is carried out by the user by the confirmation of the equality of the integrity check value reproduced by the first communication partner (12) and of the integrity check value reproduced by the second communication partner (14); wherein the anonymous signal-conducting connection (16) between the at least two communication partners (12, 14) is based on a transport layer security protocol.

2. The method according to Claim 1, **characterized in that** the first communication partner (12) of the at least two communication partners (12, 14) is designed as a vehicle-internal device and/or the second communication partner (14) of the at least two communication partners (12, 14) is designed as a mobile device.

3. The method according to any one of the preceding claims, **characterized in that** the provision of a shared secret key for the at least two communication partners (12, 14) comprises the following step:
- Carrying out a key exchange protocol for generating the shared secret key.

4. The method according to any one of the preceding claims, **characterized in that** the key exchange protocol comprises a Diffie-Hellman key exchange protocol.

5. The method according to any one of the preceding claims, **characterized in that** the confirmation of the equality of the integrity check value reproduced by the first communication partner (12) and of the integrity check value reproduced by the second communication partner (14) by the user comprises at least one of the following steps:
- Actuation of an actuating device (24) of the first communication partner (12) by the user;
- actuation of an actuating device (32) of the second communication partner (14) by the user.

6. The method according to any one of the preceding claims, **characterized in that** the integrity check value calculated by the first communication partner (12) and/or the second communication partner (14) is a checksum over the shared secret key or a checksum over a value derived from the shared secret key.

7. The communication system (10) having
- at least two communication partners (12, 14), **characterized in that** the at least two communication partners (12, 14) are configured to establish an anonymous signal-conducting connection (16) with one another, wherein all messages of the connection (16) between the at least two communication partners (12, 14) are encrypted with a shared secret key;
wherein the at least two communication partners (12, 14) are configured such that a user can authenticate the connection (16) between the at least two communication partners (12, 14);
wherein the at least two communication partners (12, 14) are configured to calculate in each case an integrity check value on the basis of the shared secret key and to reproduce it to the user by means of a display device (22, 30), wherein the at least two communication partners (12, 14) provide to the user preferably in each case a confirmation device (24, 32) for confirming the equality of the integrity check values reproduced by the at least two communication partners (12, 14);
wherein the anonymous signal-conducting connection (16) between the at least two communication partners (12, 14) is based on a transport layer security protocol.

8. The communication system (10) according to Claim 7, **characterized in that** a first communication partner (12) of the at least two communication partners (12, 14) is designed as a vehicle-internal device and/or a second communication partner (14) of the at least two communication partners (12, 14) is designed as a mobile device.

9. The communication system (10) according to any one of Claims 7 or 8, **characterized in that** the at least two communication partners (12, 14) are configured to carry out a key exchange protocol, in particular a Diffie-Hellman key exchange protocol, for generating the shared secret key.

10. The communication system (10) according to any one of the Claims 7 to 9, **characterized in that** the communication system (10) is configured to carry out the method for providing an authenticated connection (16) between at least two communication partners (12, 14) according to any one of Claims 1 to 6.

## Revendications

1. Procédé pour la mise à disposition d'une liaison authentifiée (16) entre au moins deux partenaires de communication (12, 14) avec les étapes suivantes :
- mise à disposition d'une clé secrète commune pour les au moins deux partenaires de communication (12, 14) ;
- établissement d'une liaison anonyme de transmission de signaux (16) entre les au moins deux partenaires de communication (12, 14), tous les messages de la liaison (16) entre les au moins deux partenaires de communication (12, 14) étant chiffrés avec la clé secrète commune ;
- authentification de la liaison (16) entre les au moins deux partenaires de communication (12, 14) par un utilisateur ;
l'authentification de la liaison (16) entre les au moins deux partenaires de communication (12, 14) par l'utilisateur comprenant les étapes suivantes :
- calcul d'une première valeur de contrôle d'intégrité sur la base de la clé secrète commune par le premier partenaire de communication (12) des au moins deux partenaires de communication (12, 14) ;
- calcul d'une deuxième valeur de contrôle d'intégrité sur la base de la clé secrète commune par le deuxième partenaire de communication (14) des au moins deux partenaires de communication (12, 14) ;
- reproduction, par le premier partenaire de communication (12), de la valeur de contrôle d'intégrité calculée par le premier partenaire de communication (12) ;
- reproduction, par le deuxième partenaire de communication (14), de la valeur de contrôle d'intégrité calculée par le deuxième partenaire de communication (14) ;
- comparaison, par l'utilisateur, de la valeur de contrôle d'intégrité reproduite par le premier partenaire de communication (12) avec la valeur de contrôle d'intégrité reproduite par le deuxième partenaire de communication (14) ;
- confirmation, par l'utilisateur, de l'égalité de la valeur de contrôle d'intégrité reproduite par le premier partenaire de communication (12) et de la valeur de contrôle d'intégrité reproduite par le deuxième partenaire de communication (14) ;
l'authentification de la liaison (16) entre les au moins deux partenaires de communication (12, 14) ayant lieu grâce à la confirmation, par l'utilisateur, de l'égalité de la valeur de contrôle d'intégrité reproduite par le premier partenaire de communication (12) et de la valeur de contrôle d'intégrité reproduite par le deuxième partenaire de communication (14) ;
la liaison anonyme de transmission de signaux (16) entre les au moins deux partenaires de communication (12, 14) étant basée sur un protocole Transport Layer Security.

2. Procédé selon la revendication 1, **caractérisé en ce que** le premier partenaire de communication (12) des au moins deux partenaires de communication (12, 14) est conçu comme un dispositif intérieur d'un véhicule et/ou le deuxième partenaire de communication (14) des au moins deux partenaires de communication (12, 14) est conçu comme un terminal mobile.

3. Procédé selon l'une des revendications précédentes, **caractérisée en ce que** la mise à disposition d'une clé secrète commune pour les au moins deux partenaires de communication (12, 14) comprend l'étape suivante :
- réalisation d'un protocole d'échange de clés pour la génération de la clé secrète commune.

4. Procédé selon l'une des revendications précédentes, **caractérisée en ce que** le protocole d'échange de clés comprend un protocole d'échange de clés Diffie-Hellman.

5. Procédé selon l'une des revendications précédentes, **caractérisée en ce que** la confirmation, par l'utilisateur, de l'égalité de la valeur de contrôle d'intégrité reproduite par le premier partenaire de communication (12) et de la valeur de contrôle d'intégrité reproduite par le deuxième partenaire de communication (14) comprend au moins une des étapes suivantes :
- actionnement, par l'utilisateur, d'un dispositif d'actionnement (24) du premier partenaire de communication (12) ;
- actionnement, par l'utilisateur, d'un dispositif d'actionnement (32) du deuxième partenaire de communication (14).

6. Procédé selon l'une des revendications précédentes, **caractérisée en ce que** la valeur de contrôle d'intégrité calculée par le premier partenaire de communication (12) et/ou le deuxième partenaire de communication (14) est une somme de contrôle sur la clé secrète commune ou une somme de contrôle sur une valeur dérivée de la clé secrète commune.

7. Système de communication (10), avec
- au moins deux partenaires de communication (12, 14), **caractérisé en ce que**
les au moins deux partenaires de communication (12, 14) sont conçus pour établir entre eux une liaison anonyme de transmission de signaux (16), tous les messages de la liaison (16) entre les au moins deux partenaires de communication (12, 14) étant chiffrés avec une clé secrète commune ;
les au moins deux partenaires de communication (12, 14) sont conçus de façon à ce qu'un utilisateur puisse authentifier la liaison (16) entre les au moins deux partenaires de communication (12, 14) ;
les au moins deux partenaires de communication (12, 14) sont conçus pour calculer chacun une valeur de contrôle d'intégrité sur la base de la clé secrète commune et la reproduire, à l'attention de l'utilisateur, au moyen d'un dispositif d'affichage (22, 30), les au moins deux partenaires de communication (12, 14) mettant à la disposition de l'utilisateur, de préférence chacun un dispositif d'actionnement (24, 32) pour la confirmation de l'égalité des valeurs de contrôle d'intégrité reproduits par les au moins deux partenaires de communication (12, 14) ;
la liaison anonyme de transmission de signaux (16) entre les au moins deux partenaires de communication (12, 14) étant basée sur un protocole Transport Layer Security.

8. Système de communication (10) selon la revendication 7, **caractérisé en ce qu'**un premier partenaire de communication (12) des au moins deux partenaires de communication (12, 14) est conçu comme un dispositif intérieur d'un véhicule et/ou le deuxième partenaire de communication (14) des au moins deux partenaires de communication (12, 14) est conçu comme un terminal mobile.

9. Système de communication (10) selon l'une des revendications 7 ou 8, **caractérisé en ce que** les au moins deux partenaires de communication (12, 14) sont conçus pour exécuter un protocole d'échange de clés, plus particulièrement un protocole d'échange de clés Diffie-Hellman, pour la génération de la clé secrète commune.

10. Système de communication (10) selon l'une des revendications 7 à 9, **caractérisé en ce que** le système de communication (10) est conçu pour exécuter le procédé de mise à disposition d'une liaison authentifiée (16) entre les au moins deux partenaires de communication (12, 14) selon l'une des revendications 1 à 6.
